# EUROPÄISCHE PATENTSCHRIFT

(11) **EP 3 583 078 B1**
(45) Veröffentlichungstag und Bekanntmachung des Hinweises auf die Patenterteilung: **28.10.2020**
(21) Anmeldenummer: 18701413.9
(22) Anmeldetag: 11.01.2018
(51) Int. Cl.: C03B 27/044, C03B 35/20, C03B 23/025, C03B 40/00

(54) **VORSPANNRAHMEN ZUM THERMISCHEN VORSPANNEN VON GLASSCHEIBEN**
FRAME FOR THERMAL STRENGTHENING OF GLASS SHEETS
SUPPORT DE TREMPE THERMIQUE POUR UNE FEUILLE DE VERRE

(30) Priorität: 20.02.2017 EP 17156832
(43) Veröffentlichungstag der Anmeldung: 25.12.2019
(73) Patentinhaber: SAINT-GOBAIN GLASS FRANCE, 92400 Courbevoie (FR)
(72) Erfinder: ZEICHNER, Achim, 52134 Herzogenrath (DE); SCHILLINGS, Peter, 52249 Eschweiler (DE); DEBAILLEUL, Romain, 60150 Villers sur Coudun (FR); MACHURA, Christophe, 60150 Chevincourt (FR); PROCUREUR, Patrick, 60190 Montmartin (FR)
(74) Vertreter: Hermanns, Ellen
(86) Internationale Anmeldenummer: PCT/EP2018/050627
(87) Internationale Veröffentlichungsnummer: WO 2018/149566

(56) Entgegenhaltungen:
- GB-A- 1 210 887
- US-A- 3 484 226
- US-A- 4 396 410
- US-A- 5 974 834
- DATABASE WPI Week 201342 20. Februar 2013 (2013-02-20) Thomson Scientific, London, GB; AN 2013-J20322 XP002772258, -& CN 202 744 446 U (FUYAO GROUP SHANGHAI AUTOMOBILE GLASS CO) 20. Februar 2013 (2013-02-20)

## Beschreibung

Die Erfindung betrifft einen Vorspannrahmen zum thermischen Vorspannen von Glasscheiben sowie ein damit durchgeführtes Vorspannverfahren.

Das thermische Härten von Glasscheiben ist seit langem bekannt. Es wird häufig auch als thermisches Vorspannen oder Tempern bezeichnet. Lediglich beispielhaft sei auf die Patentdokumente DE 710690 A, DE 808880 B, DE 1056333 A aus den 1940er und 1950er Jahren verwiesen. Eine auf knapp unter Erweichungstemperatur erhitzte Glasscheibe wird dabei mit einem Luftstrom beaufschlagt, die zu einem raschen Abkühlen (Abschrecken) der Glasscheibe führt. Dadurch bildet sich in der Glasscheibe ein charakteristisches Spannungsprofil aus, wobei Druckspannungen an den Oberflächen und Zugspannungen im Kern der Glasscheibe vorherrschen. Dies hat auf zweierlei Weise Einfluss auf die mechanischen Eigenschaften der Glasscheibe. Erstens wird die Bruchstabilität der Scheibe gesteigert und sie kann höheren Belastungen widerstehen als eine ungehärtete Scheibe. Zweitens erfolgt ein Glasbruch nach Penetration der zentralen Zugspannungszone (etwa durch Beschädigung durch einen spitzen Stein oder durch absichtliches Zerstören mit einem spitzen Notfallhammer) nicht in Form großer scharfkantiger Scherben, sondern in Form kleiner, stumpfer Fragmente, wodurch die Verletzungsgefahr erheblich herabgesetzt wird. Aufgrund der vorstehend beschriebenen Eigenschaften werden thermisch vorgespannte Glasscheiben als sogenanntes Einscheibensicherheitsglas im Fahrzeugbereich eingesetzt, insbesondere als Heckscheiben und Seitenscheiben.

Beim Vorspannen kommen sogenannte Blaskästen (*quench box, quench head*) zum Einsatz, denen durch starke Ventilatoren ein Luftstrom zugeleitet wird. Im Blaskasten wird der Luftstrom in verschiedene Kanäle aufgeteilt, die jeweils mit einer Düsenleiste abgeschlossen sind. Die Düsenleisten weisen eine Seitenfläche mit einer Reihe von Blasöffnungen oder Düsenöffnungen auf, die auf die Glasscheibe gerichtet sind und diese mit dem mittels des Blaskastens verteilten Luftstroms beaufschlagen. Die Glasscheibe wird typischerweise zwischen einen oberen und einen unteren Blaskasten gefahren, die Blaskästen dann einander und den Scheibenoberflächen zum Vorspannen angenähert. Die Gesamtvorrichtung mit den beiden Blaskästen wird häufig als Vorspannstation bezeichnet.

Beim Vorspannen werden die Glasscheiben auf sogenannten Vorspannrahmen gelagert und transportiert. Der Vorspannrahmen ist auf die jeweilige Scheibengeometrie angepasst und in der Regel austauschbar in einem Transportgestell aufgehängt. Ein Vorspannrahmen umfasst typischerweise einen Trägerrahmen, der am Transportgestell befestigt ist, und einen Auflagerahmen, auf den die Glasscheibe abgelegt wird. Trägerrahmen und Auflagerahmen sind über einen Vielzahl von Stellschrauben miteinander verbunden, um die genaue Form des Auflagerahmens an die jeweilige Scheibenkrümmung anpassen zu können. Die Stellschrauben sind dazu über den gesamten Umfang des Rahmens mit einem gewissen Abstand verteilt, so dass die Höhe jedes einer Stellschraube zugeordneten Bereichs des Auflagerahmens exakt eingestellt werden kann.

Bei herkömmlichen Vorspannrahmen sind Trägerrahmen und Auflagerahmen übereinander angeordnet. Daraus resultiert ein hoher Gesamtaufbau, der während des Vorspannes zwischen den beiden Blaskästen angeordnet ist. Es ergibt sich ein Mindestabstand zwischen den Blaskästen und damit zwischen Blaskasten und jeweils zugeordneter Scheibenoberfläche, der nicht unterschritten werden kann. Die Vorspanneffizienz, die wesentlich vom Abstand der Blaskästen von den Scheibenoberflächen abhängt, wird dadurch limitiert. Ein Vorspannrahmen dieser Art ist beispielsweise aus US5118335A oder WO2012049433A1 bekannt.

Es sind auch Vorspannrahmen bekannt, bei denen Trägerrahmen und Auflagerahmen örtlich versetzt sind, wobei der Auflagerahmen in Draufsicht vollständig innerhalb des Trägerrahmens angeordnet ist, beispielsweise aus US4556408A oder US5472470A. Es ist bei einem solchen Prinzip möglich, lediglich den Auflagerahmen zwischen den Blaskästen anzuordnen, während der Trägerrahmen mit der Stellschraube außerhalb verbleiben, wobei der Auflagerahmen über ein sich vom Blaskasten-Zwischenraum nach außen erstreckendes Verbindungselement mit der Stellschraube verbunden ist. Dadurch kann die Minimaldistanz der Blaskästen verringert und die Vorspanneffizienz erhöht werden. Durch eine höhere Vorspanneffizienz können höhere Spannungen erzeugt werden oder ein gegebenes Spannungsprofil energiesparender erzeugt werden. Es hat sich jedoch gezeigt, dass die örtliche Entkopplung von Trägerrahmen und Auflagerahmen zu einer geringen Empfindlichkeit beim Justieren der Form des Auflagerahmens mittels der Stellschrauben führt. Eine Drehung der Stellschraube führt zu einer geringeren Veränderung der Form des Auflagerahmens, so dass der Auflagerahmen weniger effizient an die Scheibenbiegung angepasst werden kann.

GB1210887 A lehrt einen Vorspannrahmen zum thermischen Vorspannen von Glasscheiben mit einem Trägerrahmen und einem Auflagerahmen, der mit dem Trägerrahmen über eine Mehrzahl von Verbindungselementen verbunden und innerhalb des Trägerrahmens angeordnet ist. Der Auflagerahmen weist eine obere Kante zum Auflegen einer Glasscheibe auf, die genutet ist. In die untere Kante des Auflagerahmens sind Ausnehmungen eingebracht, die zwischen benachbarten Verbingungselementen angeordnet sind.

US5974834 A lehrt einen Vorspannrahmen wie in GB1210887 A, doch mit dem Unterschied, dass der Auflagerahmen nicht vertikal sondern horizontal ausgerichtet ist, d.h., das Blech ist liegend orientiert, nicht stehend. Ausnehmungen sind in der Vorderkante des Auflagerahmens angeordnet.

Der vorliegenden Erfindung liegt die Aufgabe zugrunde, einen verbesserten Vorspannrahmen bereitzustellen, der eine geringe Distanz der Blaskästen ermöglicht und bei dem die Form des Auflagerahmens dennoch effizient justierbar ist.

Die Aufgabe wird erfindungsgemäß gelöst durch einen Vorspannrahmen gemäß dem unabhängigen Anspruch 1. Bevorzugte Ausgestaltungen gehen aus den abhängigen Ansprüchen hervor.

Vorspannrahmen sind seit langem gebräuchlich, um Glasscheiben beim thermischen Vorspannen zu lagern und zu transportieren. Darunter wird eine rahmen- oder ringartige Vorrichtung verstanden, auf welche die umlaufende Seitenkante der Glasscheibe abgelegt wird und die typischerweise austauschbar an einem Transportgestell befestigt ist. Da der Vorspannrahmen an die jeweilige Form des vorzuspannenden Glasscheibentyps angepasst ist, können für verschiedene Scheibentypen dieselben Transportgestelle verwendet werden, wobei bei einem Wechsel des Scheibentyps lediglich der Vorspannrahmen ausgetauscht werden muss. Es ist aber auch üblich, die Form des Transportgestells grob an den Scheibentyp anzupassen, so dass jedem vorzuspannende Scheibentyp ein eigener Typ an Transportgestellen zugeordnet ist.

Der erfindungsgemäße Vorspannrahmen zum thermischen Vorspannen von Glasscheiben umfasst einen Trägerrahmen und einen Auflagerahmen. Der Auflagerahmen ist über eine Mehrzahl von Verbindungselementen mit dem Trägerrahmen verbunden und in Draufsicht vollständig innerhalb des Trägerrahmens angeordnet. Trägerrahmen und Auflagerahmen sind also versetzt zueinander angeordnet, wobei der Trägerrahmen den Auflagerahmen vollständig umrahmt. Trägerrahmen und Auflagerahmen sind dadurch gleichsam räumlich entkoppelt und über die den Zwischenraum überbrückenden Verbindungselemente miteinander verbunden, wobei die Verbindungselemente bevorzugt jeweils mit einer platzsparenden Befestigungsschraube mit dem Auflagerahmen und mit einer Stellschraube mit dem Trägerrahmen verbunden sind. Beim Vorspannen kann dann lediglich der Auflagerahmen samt Glasscheibe im Zwischenraum zwischen den Blaskästen angeordnet werden, während der Trägerrahmen samt Stellschraube außerhalb verbleibt. Dadurch können die Blaskästen näher an die Scheibenoberflächen angenähert und die Vorspanneffizienz gesteigert werden.

Die Stellschrauben dienen dazu, den zugeordneten Bereich des Auflagerahmens relativ zum Trägerrahmen zu heben oder zu senken. Durch das Heben oder Senken einer Stellschraube wird der Bereich des Auflagerahmens, der durch die beiden benachbarten Stellschrauben begrenzt wird, verformt. Je mehr Stellschrauben (und Verbindungselemente) entlang des Auflagerahmens vorhanden sind, desto genauer ist seine Form einstellbar.

Die Anordnung des Auflagerahmens innerhalb des Trägerrahmens bezieht sich lediglich auf die Draufsicht - die beiden Rahmen müssen nicht in der gleichen Höhenebene angeordnet sein. Werden Auflagerahmen und Trägerrahmen auf eine gemeinsame Ebene projiziert, so ist die Projektion des Auflagerahmens vollständig innerhalb der Projektion des Trägerrahmens angeordnet.

Die Begriffe "Auflagerahmen" und "Trägerrahmen" im Sinne der Erfindung dienen zur Beschreibung ihrer grundsätzlichen Form als rahmen- oder ringartige Vorrichtungen, im Unterschied beispielsweise zu einer vollflächigen Wirkfläche, die mit der gesamten Glasscheibe in Kontakt kommt. Die "Rahmen" müssen nicht notwendigerweise vollständig ausgebildet sein, sondern können auch Unterbrechungen aufweisen.

Der Auflagerahmen ist typischerweise aus mehreren streifenartigen Blechstücken zusammengesetzt, kann prinzipiell aber auch einstückig ausgebildet sein. Der Auflagerahmen weist eine obere Hauptfläche, eine der oberen Hauptfläche gegenüberliegende untere Hauptfläche sowie mindestens zwei zwischen den Hauptflächen verlaufende Seitenkanten auf, nämlich eine Vorderkante (vordere Seitenkante), die im bestimmungsgemäßen Einsatz der Glasscheibe zugewandt ist, und eine Hinterkante (hintere Seitenkante), die von der Glasscheibe abgewandt und dem Trägerrahmen zugewandt ist. Ist der Auflagerahmen aus mehreren Teilstücken zusammengesetzt, so weist jedes Teilstück darüber hinaus zwei Stirnflächen auf.

Die obere Hauptfläche des Auflagerahmens ist zum Auflegen der vorzuspannenden Glasscheibe vorgesehen, genauer gesagt zum Auflegen eines umlaufenden Randbereichs der Glasscheibe, insbesondere einer umlaufenden Seitenkante der Glasscheibe. Die Vorderkante des Auflagerahmens befindet sich im bestimmungsgemäßen Einsatz also unterhalb der Glasscheibe und weist auf deren Mitte. Man kann eine Glasscheiben-Kontaktlinie auf der oberen Hauptfläche definieren, die der Position der umlaufenden Seitenkante der vorzuspannenden Glasscheibe im bestimmungsgemäßen Einsatz in Draufsicht auf der oberen Hauptfläche entspricht. Diese Glasscheiben-Kontaktlinie ist typischerweise innerhalb der an die Vorderkante angrenzenden Hälfte der oberen Hauptfläche angeordnet. Somit kann die obere Auflagefläche grob entlang ihrer Breite in zwei Hälften aufgeteilt werden, wobei die an die Vorderkante angrenzende Hälfte der Auflage der Glasscheibe und die an die Hinterkante angrenzende Hälfte der Befestigung am Trägerrahmen dient.

Erfindungsgemäß weist der Auflagerahmen Ausnehmungen auf, die über die Hinterkante eingebracht und zwischen benachbarten Verbindungselementen angeordnet sind. Anders ausgedrückt ist die Hinterkante nicht gerade ausgebildet, sondern weist Ausnehmungen, Einschnitte oder Rückschnitte auf zwischen benachbarten Verbindungselementen (oder zwischen den zum Anbringen der Verbindungselemente vorgesehenen Schraublöchern des Auflagerahmens). Unter der Ausnehmung wird im Sinne der Erfindung ein Ein- oder Rückschnitt im Vergleich zur hypothetischen Seitenkante verstanden, die sich aus der Verbindungslinie der typischerweise periodisch auftretenden, am meisten herausragenden Bereiche der Hinterkante ergibt, typischerweise im Überlappungsbereich mit den Verbindungselementen. Bevorzugt weist die Hinterkante im Überlappungsbereich mit den Verbindungselementen jeweils einen geraden Abschnitt auf, wobei die Gesamtheit der besagten Abschnitte auf einer Linie liegen, die der hypothetischen Seitenkante entspricht, in Bezug auf die die Ausnehmungen definiert sind.

Der Erfindung liegt die Erkenntnis zugrunde, dass die Justierbarkeit des Auflagerahmens dadurch verbessert werden kann, dass die Struktur des Auflagerahmens gleichsam geschwächt wird. Dies wird durch die erfindungsgemäßen Ausnehmungen erreicht. Der Auflagerahmen wird dadurch flexibler und weniger starr, so dass er auf die Einstellung der Stellschraube empfindlicher reagiert. Der Auflagerahmen kann dann effizienter an die gebogene Form der Glasscheibe angepasst werden. Das ist der große Vorteil der Erfindung. Darüber hinaus wird durch die Ausnehmungen der Strömungswiderstand reduziert, welcher dem Luftstrom beim Vorspannen entgegengesetzt wird, was vorteilhaft für das Vorspannergebnis ist. Zudem wird das Gesamtmaterial des Vorspannrahmens verringert, so dass er weniger Wärme speichern kann.

Die erfindungsgemäße Wirkung ist natürlich dann am meisten ausgeprägt, wenn der Auflagerahmen möglichst viele Ausnehmungen aufweist, wenn also zwischen jedem Paar benachbarter Verbindungselemente jeweils mindestens eine Ausnehmung angeordnet ist.

Jedoch lässt sich der erfindungsgemäße Gedanke auch mit weniger Ausnehmungen realisieren. In einer vorteilhaften Ausgestaltung sind zwischen mindestens 50 % der benachbarten Verbindungselemente Ausnehmungen angeordnet (womit gemeint ist, dass mindestens 50 % aller Paare benachbarter Verbindungselemente über eine zwischen den beiden Verbindungselementen angeordnete Ausnehmung verfügen), bevorzugt zwischen mindestens 70 %, besonders bevorzugt zwischen mindestens 80 %, ganz besonders bevorzugt zwischen mindestens 90 %, insbesondere 100%. Es ist auch denkbar, nur einen Teil des Auflagerahmens mit den erfindungsgemäßen Ausnehmungen auszustatten. So kann ein Auflagerahmen realisiert werden, der in Abhängigkeit von der Scheibengeometrie Bereiche aufweist, die eine feine Justiermöglichkeiten aufweisen müssen und daher mit den Ausnehmungen ausgestattet sind, neben Bereichen, die weniger justiert werden müssen und auf herkömmliche Art ausgebildet sind. In diesem Fall beziehen sich die vorstehend genannten bevorzugten Prozentangaben nur auf den erfindungsgemäß ausgebildeten Bereich.

Die Breite des Auflagerahmens beträgt bevorzugt von 10 mm bis 100 mm, besonders bevorzugt von 20 bis 80 mm. In einer besonders vorteilhaften Ausgestaltung weist der Auflagerahmen eine sehr geringe Breite von höchstens 50 mm auf, bevorzugt von 20 mm bis 40 mm auf. Dadurch wird die Flexibilität des Auflagerahmens und somit dessen Justierbarkeit weiter erhöht. Außerdem kann Platz und Material eingespart werden. Mit Breite wird die kurze Dimension der oberen und unteren Hauptfläche bezeichnet zwischen der Vorder- und der Hinterkante und senkrecht auf besagte Kanten.

Der Auflagerahmen weist bevorzugt eine Dicke von 1 mm bis 10 mm auf, besonders bevorzugt von 2 mm bis 5 mm. Mit Dicke wird die Dimension entlang der Vorder- und Hinterkante zwischen oberer und unterer Hauptfläche und senkrecht auf besagte Hauptfläche verstanden. Die Dicke kann auch als Materialstärke des den Auflagerahmen bildenden Blechs bezeichnet werden.

Der Auflagerahmen enthält bevorzugt Aluminium oder Stahl und ist bevorzugt aus den besagten Materialen gefertigt. Diese Materialien sind gut zu bearbeiten, so dass der Auflagerahmen vorteilhaft hergestellt werden kann, und bedingen eine vorteilhafte Stabilität des Auflagerahmens im Langzeiteinsatz, sind insbesondere temperaturstabil. Die Bearbeitung des Auflagerahmens bei der Herstellung des erfindungsgemäßen Vorspannrahmens umfasst typischerweise das Biegen des Auflagerahmens in die gewünschte dreidimensionale Form sowie das Einbringen der erfindungsgemäßen Ausnehmungen und etwaiger weiterer Durchbrüche oder Gestaltungselemente, beispielsweise mittels Laserschneiden oder Wasserstrahlschneiden.

Hinsichtlich der Form der Ausnehmungen besteht prinzipiell keine Einschränkung und sie kann vom Fachmann nach den Erfordernissen des Einzelfalls, aber auch beispielsweise nach ästhetischen Kriterien gewählt werden. Die Ausnehmungen können beispielsweise eine rechteckige, dreieckige oder kreissegmentartige Form aufweisen oder auch Kombinationen davon.

Die Tiefe der Ausnehmungen beträgt bevorzugt mindestens 10 % der Breite des Auflagerahmens, besonders bevorzugt mindestens 20 %. In einer vorteilhaften Ausgestaltung weisen die Ausnehmungen eine Tiefe von 10 % bis 70 % der Breite des Auflagerahmens auf, bevorzugt von 20 % bis 50 %. Bei typischen Breiten des Auflagerahmens beträgt die Tiefe der Ausnehmung beispielsweise von 5 mm bis 20 mm. Die Tiefe drückt aus, wie weit sich die Ausnehmung ausgehend von der hypothetischen ursprünglichen Hinterkante in den Auflagerahmen hinein erstreckt.

Die Ausnehmungen weisen in einer vorteilhaften Ausgestaltung eine Breite von mindestens 50 % des Abstands der benachbarten Verbindungselemente auf, bevorzugt von mindestens 70 %, besonders bevorzugt von mindestens 90 %. Das ist besonders vorteilhaft für die Justierbarkeit des Auflagerahmens. Die Breite der Ausnehmungen kann in einer besonders vorteilhaften Ausgestaltung 100 % des Abstands der benachbarten Verbindungselemente betragen. Die Breite der Ausnehmungen wird im Wesentlichen senkrecht zur Breite des Auflagerahmens gemessen. Ist die Breite nicht über die gesamte Tiefe konstant, so ist der Maximalwert zugrunde zu legen.

In einer besonders vorteilhaften Ausgestaltung nimmt die Breite der Ausnehmung mit wachsender Tiefe ab, bevorzugt stetig und monoton ab. Das bewirkt vorteilhafterweise eine besonders gleichmäßige Kraftverteilung beim Justieren des Auflagerahmens mittels der Stellschrauben. Die Ausnehmungen weisen besonders bevorzugt eine gekrümmte oder geschwungene Kontur auf. So ergibt sich ein gleichsam wellenartiger Verlauf der verbleibenden Seitenkante, der zu besonders guten Ergebnissen führt, wie die Erfinder erkannt haben. Die Breite wird in diesem Fall an der hypothetischen Hinterkante ohne Ausnehmungen gemessen, also entlang der Verbindungslinie zwischen den am meisten hervorragenden Punkten der Hinterkante, die die Ausnehmung begrenzen und typischerweise im Bereich der benachbarten Verbindungselemente angeordnet sind. Die Ausnehmungen können dabei eine gekrümmte Kontur mit konstantem Krümmungsradius (wie im Falle der Form eines Kreissegments), eine gekrümmte Kontur mit veränderlichem Krümmungsradius, aber gleicher Krümmungsrichtung (wie beispielsweise im Fall eines Ellipsensegments) oder auch eine gekrümmte Kontur mit veränderlichem Krümmungsradius und veränderlicher Krümmungsrichtung aufweisen (wie im Fall einer Form, die näherungsweise mit einer Kosinus-Funktion beschrieben werden kann). Die kosinusartige Ausnehmung ist die am meisten bevorzugte, weil sie zu einer besonders vorteilhaften Kraftverteilung führt und zu einem besonders sanften Wellenprofil, das vorteilhaft hergestellt und gehandhabt werden kann.

Besonders vorteilhaft ist es natürlich, wenn sämtliche Ausnehmungen die vorstehend beschriebenen bevorzugten Ausgestaltungen haben. Jedoch treten deren Vorteile auch dann zutage, wenn nur ein Teil der Ausnehmungen entsprechend ausgebildet ist. Vorteilhafterweise weisen mindestens 50 % der Ausnehmungen die vorstehend beschriebenen bevorzugten Ausgestaltungen auf, bevorzugt mindestens 70 %, besonders bevorzugt mindestens 90 % und ganz besonders bevorzugt 100 %.

Die Verbindungselemente weisen jeweils einen ersten Befestigungsabschnitt, einen zweiten Befestigungsabschnitt und einen sich zwischen den beiden Befestigungsabschnitten erstreckenden Verbindungsabschnitt auf. Der erste Befestigungsabschnitt überlappt mit dem Auflagerahmen und ist mit diesem verbunden, bevorzugt mittels einer Schraube (Befestigungsschraube), die durch ein Schraubloch im ersten Befestigungsabschnitt geführt ist. Der zweite Befestigungsabschnitt überlappt mit dem Trägerrahmen und ist mit diesem verbunden, bevorzugt mittels einer Schraube (insbesondere Stellschraube), die durch ein Schraubloch im zweiten Befestigungsabschnitt geführt ist.

Die Länge und Breite der Abschnitte des Verbindungselements kann vom Fachmann gemäß den Anforderungen im Einzelfall frei gewählt werden. So muss die Länge und Breite der Befestigungsabschnitte natürlich die Größe der verwendeten Schrauben berücksichtigen, während die Länge des Verbindungsabschnitts wesentlich durch den gewünschten Abstand von Trägerrahmen und Auflagerahmen abhängig ist.

Der Abstand zwischen Trägerrahmen und Auflagerahmen in Draufsicht (genauer gesagt der Abstand der Projektionen in dieselbe Ebene) beträgt beispielsweise von 1 cm bis 15 cm, bevorzugt von 3 cm bis 10 cm. In diesem Bereich ist der Abstand groß genug, damit der Trägerrahmen außerhalb des Zwischenraums der Blaskästen verbleiben kann, andererseits aber nicht zu groß, als dass die Stabilität des Auflagerahmens durch Hebelwirkungen zu langer Verbindungselemente beeinträchtigt würde. Zu lange Verbindungselemente würden außerdem die Verstellbarkeit des Auflagerahmens negativ beeinflussen.

In einer vorteilhaften Ausgestaltung sind der der erste Befestigungsabschnitt und der zweite Befestigungsabschnitt gegenüber dem Verbindungsabschnitt verbreitert. So werden zum einen breite Auflageflächen für die Befestigung von Auflagerahmen und Trägerrahmen und damit eine stabile Verbindung gewährleistet, während zum anderen der Verbindungsabschnitt, der größtenteils oder komplett im Zwischenraum zwischen Trägerrahmen und Auflagerahmen angeordnet ist, vorteilhaft schmal ausgebildet ist, wodurch Material und Gewicht eingespart werden kann und die Luftzirkulation, die für die Vorspanneffizienz entscheidend ist, weniger beeinträchtigt wird. Bevorzugt beträgt die Breite der beiden Befestigungsabschnitte mehr als 20 mm und die Breite des Verbindungsabschnitts weniger als 20 mm.

In einer weiteren vorteilhaften Ausgestaltung weisen der erste Befestigungsabschnitt und der Verbindungsabschnitt im Wesentlichen die gleiche Breite auf und der zweite Befestigungsabschnitt ist demgegenüber verbreitert ist. Die Auflagefläche für den Auflagerahmen auf dem Verbindungselement ist somit weiter verkleinert, wodurch das Verbindungselement den Auflagerahmen weniger stabilisiert. Die Folge ist eine noch empfindlichere Justierbarkeit. Bevorzugt beträgt die Breite des zweiten Befestigungsabschnitts mehr als 20 mm und die Breite des Verbindungsabschnitts und des ersten Befestigungsabschnitts weniger als 20 mm.

Die Verbindungselemente können beispielsweise aus Stahl oder Aluminium gefertigt sein. Der gegenseitige Abstand benachbarter Verbindungselemente beträgt bevorzugt von 5 mm bis 100 mm, besonders bevorzugt von 10 mm bis 50 mm. Dadurch wird eine vorteilhafte Stabilität und Justierbarkeit erreicht. Unter dem Abstand wird die Distanz zwischen den einander zugewandten Begrenzungen der Verbindungselemente bezeichnet, also die Breite des zwischen den Verbindungselementen frei bleibenden Raums, gemessen in der Mitte zwischen Trägerrahmen und Auflagerahmen.

Besonders vorteilhaft ist es natürlich, wenn sämtliche Verbindungselemente die vorstehend beschriebenen bevorzugten Ausgestaltungen haben. Jedoch treten deren Vorteile auch dann zutage, wenn nur ein Teil der Verbindungselemente entsprechend ausgebildet ist. Vorteilhafterweise weisen mindestens 50 % der Verbindungselemente die vorstehend beschriebenen bevorzugten Ausgestaltungen auf, bevorzugt mindestens 70 %, besonders bevorzugt mindestens 90 % und ganz besonders bevorzugt 100 %.

Der Auflagerahmen weist eine Form auf, die im Wesentlichen der Kontur der vorzuspannenden Glasscheibe entspricht. Die Form des Auflagerahmens ist daher, entsprechend der Form üblicher Fahrzeugscheiben, in Draufsicht etwa polygonal, beispielsweise rechteckig, trapezartig oder dreieckig, wobei die Seitenkanten im Vergleich zum Polygon im strengen Sinne häufig leicht gebogen ausgestaltet sind. Der Auflagerahmen ist typischerweise aus mehreren Teilstücken aufgebaut, die jeweils einer Seite des Polygons zugeordnet sind. Im Falle einer rechteckigen oder trapezartigen Scheibe ist die Auflagefläche beispielsweise aus vier geraden oder leicht gebogenen Abschnitten aufgebaut, die zur Form des Rechtecks oder Trapezes zusammengesetzt sind.

Jedes der Teilstücke des Auflagerahmens kann über eigene Verbindungselemente mit dem Trägerrahmen verbunden sein. In einer bevorzugten Ausgestaltung verfügen benachbarte Teilstücke über ein gemeinsames Verbindungselement, mit dem sie mit dem Trägerrahmen verbunden sind. Das gemeinsame Verbindungselement kann beispielsweise H-förmige ausgebildet sein und mit zwei Schrauben am Trägerrahmen und mit jeweils einer Schraube an jedem Teilstück des Auflagerahmens befestigt sein. Das gemeinsame Verbindungselement ist vorteilhafterweise etwa Y-förmig ausgebildet, wobei ein Arm mit dem Trägerrahmen und die beiden anderen Arme jeweils mit einem der benachbarten Teilstücke verbunden ist. Da das Verbindungselement nur über eine einzelne Stellschraube verfügt, können die aufeinander weisenden Enden der beiden Teilstücke nur gemeinsam eingestellt werden, so dass die Justagefreiheit eingeschränkt wird. Der Vorteil liegt allerdings in einer deutlich erhöhten Stabilität. Insbesondere kann ein störendes Vibrieren des Auflagerahmens 1 vermieden werden.

In einer bevorzugten Ausgestaltung ist der Vorspannrahmen dazu geeignet, dass separate Verbindungselemente und ein gemeinsames Verbindungselement benachbarter Teilstücke des Auflagerahmens ausgetauscht werden können. Der Trägerrahmen weist dazu Schraublöcher auf für sowohl zwei separate Verbindungselemente (zwei Schraublöcher) für benachbarte Teilstücke als auch ein gemeinsames, bevorzugt Y-förmiges Verbindungselement (ein Schraubloch).

In einer vorteilhaften Ausgestaltung weist der Auflagerahmen außer den erfindungsgemäßen Ausnehmungen weitere Öffnungen auf, die auch als Löcher oder Durchführungen bezeichnet werden können und so angeordnet sind, dass die Kante der vorzuspannenden Glasscheibe im bestimmungsgemäßen Einsatz auf den Öffnungen zum Liegen kommt. Die Öffnungen sind bevorzugt entlang des gesamten Auflagerahmens in möglichst geringem Abstand zueinander angeordnet. Gestützt wird die Glasscheibe durch die Bereiche des Auflagerahmens zwischen den Öffnungen, die möglichst klein gewählt werden. Die Öffnungen ermöglichen eine Luftzirkulation, die für die Vorspanneffizienz vorteilhaft ist. Außerdem kann die Seitenkante der Glasscheibe infolge der Öffnungen direkt mit Luft beaufschlagt werden, wodurch die Scheibe homogener abgekühlt wird und störende sogenannte Randspannungen der vorgespannten Glasscheibe vermieden werden und damit deren Stabilität verbessert wird.

Die Vorderkante und/oder die Hinterkante können lokal begrenzte Vorsprünge aufweisen. Diese sollten weniger als 30 % der betreffenden Kante ausmachen, die Lage der Kante also nicht wesentlich bestimmen. Solche Vorsprünge können beispielsweise dazu dienen, ein Gewebe zur Polsterung und thermischen Isolation auf den Auflagerahmen aufzuspannen.

Die Erfindung umfasst außerdem eine Vorrichtung zum thermischen Vorspannen von Glasscheiben. Die Vorrichtung umfasst einen ersten Blaskasten und einen zweiten Blaskasten, die einander gegenüberliegend angeordnet sind, so dass ihre Düsen aufeinander weisen. Die Blaskasten sind voneinander beabstandet, so dass eine Glasscheibe zwischen ihnen angeordnet werden kann. Typischerweise weisen die Düsen des ersten Blaskastens (oberer Blaskasten) nach unten und die Düsen des zweiten Blaskastens (unterer Blaskasten) nach oben. Dann kann eine Glasscheibe vorteilhafterweise horizontal liegend zwischen die Blaskästen bewegt werden.

Mittels der Blaskästen wird die Oberfläche der Glasscheibe mit einem Gasstrom beaufschlagt und dadurch abgekühlt. Die Blaskästen weisen einen inneren Hohlraum auf, in den mittels einer Gaszuleitung ein Gasstrom eingeleitet werden kann. Der Gasstrom wird typischerweise mittels eines Ventilators oder mehrerer in Reihe geschalteter Ventilatoren erzeugt. Ausgehend vom Hohlraum wird der Gasstrom in eine Mehrzahl von Kanälen aufgeteilt, die jeweils von einer sogenannten Düsenleiste abgeschlossen sind, die eine Vielzahl von Düsen aufweist, über welche der Gasstrom aus dem Blaskasten austreten kann. Der Blaskasten teilt also den Gasstrom aus der Gaszuleitung mit vergleichsweise geringem Querschnitt über die Kanäle und Düsen auf eine große Wirkfläche auf. Die Düsenöffnungen stellen diskrete Gasaustrittsstellen dar, die jedoch in großer Anzahl vorliegen und gleichmäßig verteilt sind, so dass alle Bereiche der Oberfläche im Wesentlichen zeitgleich und gleichmäßig abgekühlt werden, so dass die Scheibe mit einer homogenen Vorspannung versehen wird.

Die Vorrichtung umfasst bevorzugt außerdem Mittel zur Änderung des Abstands zwischen erstem und zweitem Blaskasten. Dadurch können die Blaskästen relativ aufeinander zu und voneinander weg bewegt werden. Nachdem die Glasscheibe im weiter beabstandeten Zustand der Blaskästen zwischen diese eingefahren worden ist, wird der Abstand der Blaskästen zueinander und damit zur Glasscheibe verringert, wodurch ein stärkerer Gasstrom auf der Glasoberfläche erzeugt werden kann.

Die Gestaltung der Blaskästen und ihrer Gaskanäle und Düsenleisten ist bevorzugt auf die Form der vorzuspannenden Scheibe angepasst. Die Düsenöffnungen eines Blaskastens spannen dabei eine konvex gekrümmte Fläche auf und die Düsenöffnungen des gegenüberliegenden Blaskastens eine konkav gekrümmte Fläche. Der Stärke der Krümmung richtet sich ebenfalls nach der Scheibenform. Beim Vorspannen wird der konvexe Blaskasten der konvexen Oberfläche der Scheibe zugewandt und der konkave Blaskaste der konkaven Oberfläche. So können die Düsenöffnung näher an der Glasoberfläche positioniert werden, was die Vorspanneffizienz erhöht. Da die Scheiben üblicherweise mit nach oben weisender konkaver Oberfläche zur Vorspannstation transportiert werden, ist der obere Blaskasten bevorzugt konvex und der untere konkav ausgestaltet.

Die Vorrichtung umfasst außerdem Mittel zur Bewegung einer Glasscheibe, die dazu geeignet sind, eine Glasscheibe in den Zwischenraum zwischen den beiden Blaskästen zu bewegen und aus besagtem Zwischenraum wieder heraus. Hierzu kann beispielsweise ein Schienen-, Rollen- oder Laufbandsystem verwendet werden. Die Mittel zur Bewegung der Glasscheibe umfassen ein Transportgestell, in welchem ein erfindungsgemäßer Vorspannrahmen aufgehängt ist. Die Glasscheibe ist beim Transport und beim Vorspannen auf einem dem Vorspannrahmen gelagert. Beim Vorspannen wird das Transportgestell typischerweise periodisch bewegt, damit die Düsen des Blaskastens nicht über den gesamten Zeitraum auf dieselben Stellen der Glasscheibe gerichtet sind.

Durch den erfindungsgemäßen Vorspannrahmen wird ein geringerer Abstand zwischen den beiden Blaskästen ermöglicht. In einer bevorzugten Ausführung beträgt der Abstand der Blaskästen im angenäherten Zustand beim Vorspannen weniger als 90 mm, besonders bevorzugt weniger als 70 mm, ganz besonders bevorzugt weniger als 50 mm.

Die Erfindung umfasst auch eine Anordnung zum thermischen Vorspannen von Glasscheiben, umfassend die erfindungsgemäße Vorrichtung und eine zwischen den beiden Blaskästen angeordnete Glasscheibe.

Die Erfindung umfasst außerdem ein Verfahren zum thermischen Vorspannen von Glasscheiben, wobei
(a) ein erfindungsgemäßer Vorspannrahmen, auf dessen Auflagerahmen eine erhitzte Glasscheibe angeordnet ist, zwischen einen ersten Blaskasten und einen zweiten Blaskasten bewegt wird, wobei die Glasscheibe flächig zwischen den Blaskästen angeordnet wird, so dass die beiden Hauptflächen mit einem Gasstrom beaufschlagt werden können;
(b) die beiden Hauptflächen der Glasscheibe mittels der beiden Blaskästen mit einem Gasstrom beaufschlagt werden, so dass die Glasscheibe abgekühlt wird.

Die Vorspannform ist bevorzugt in einem Transportgestell aufgehängt, welches durch Bewegungsmittel wie Rollen, Schienen oder einem Laufband zwischen die Blaskästen transportiert wird. Bevorzugt werden die Blaskästen einander angenähert, nachdem die Glasschiebe zwischen ihnen angeordnet worden ist. So wird der Abstand der Düsenöffnungen zur Scheibenoberfläche verkürzt und die Vorspanneffizienz erhöht.

Das Beaufschlagen der Scheibenoberflächen mit dem Gasstrom erfolgt, indem ein Gasstrom in den inneren Hohlraum jedes Blaskastens eingeleitet wird, dort aufgeteilt und über die Düsenöffnungen gleichmäßig verteilt auf die Scheibenoberflächen geleitet wird. Das zur Kühlung der Glasscheibe verwendete Gas ist bevorzugt Luft. Die Luft kann zur Erhöhung der Vorspanneffizienz innerhalb der Vorspannvorrichtung aktiv gekühlt werden.

Typischerweise wird aber Luft verwendet, welche nicht durch aktive Maßnahmen speziell temperiert ist.

Die Scheibenoberflächen werden bevorzugt über einen Zeitraum von 1 s bis 10 s mit dem Gasstrom beaufschlagt.

Die vorzuspannende Glasscheibe besteht in einer bevorzugten Ausführung aus Kalk-Natron-Glas, wie es für Fensterscheiben üblich ist. Die Glasscheibe kann aber auch andere Glassorten wie Borsilikatglas oder Quarzglas enthalten oder daraus bestehen. Die Dicke der Glasscheibe beträgt typischerweise von 0,2 mm bis 10 mm, bevorzugt 0,5 mm bis 5 mm.

Das erfindungsgemäße Verfahren schließt sich in einer vorteilhaften Ausführung unmittelbar an einen Biegeprozess an, in dem die im Ausgangszustand planen Glasscheibe gebogen wird. Während des Biegeprozesses wird die Glasscheibe bis auf Erweichungstemperatur erhitzt. Der Vorspannprozess schließt sich an den Biegeprozess an, bevor die Glasscheibe signifikant abgekühlt ist. Dazu wird die Glasscheibe nach dem Biegeprozess oder im letzten Schritt des Biegeprozesses von den Biegewerkzeugen auf die Vorspannform übergeben. So muss die Glasscheibe zum Vorspannen nicht noch einmal eigens erhitzt werden.

Gebogene, vorgespannte Scheiben sind insbesondere im Fahrzeugbereich üblich. Die erfindungsgemäß vorzuspannende Glasscheibe ist daher bevorzugt als Fensterscheibe eines Fahrzeugs, besonders bevorzugt eines Kraftfahrzeugs und insbesondere eines Personenkraftwagens vorgesehen.

Die Erfindung umfasst außerdem die Verwendung einer mit dem erfindungsgemäßen Verfahren vorgespannten Glasscheibe in Fortbewegungsmitteln für den Verkehr auf dem Lande, in der Luft oder zu Wasser, bevorzugt als Fensterscheibe in Schienenfahrzeugen oder Kraftfahrzeugen, insbesondere als Heckscheibe, Seitenscheibe oder Dachscheibe von Personenkraftwagen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:
- Fig. 1: eine Draufsicht auf eine Ausgestaltung des erfindungsgemäßen Vorspannrahmens,
- Fig. 2: einen Querschnitt durch den Vorspannrahmen gemäß Figur 1,
- Fig. 3: einen Querschnitt durch eine Anordnung zum thermischen Vorspannen von Glasscheiben mit dem Vorspannrahmen gemäß Figur 1,
- Fig. 4: eine Draufsicht auf einen Abschnitt einer Ausgestaltung des erfindungsgemäßen Vorspannrahmens,
- Fig. 5: eine Draufsicht auf einen Abschnitt einer weiteren Ausgestaltung des erfindungsgemäßen Vorspannrahmens,
- Fig. 6: eine perspektivische Ansicht einer Ausgestaltung des Verbindungselements 3,
- Fig. 7: eine perspektivische Ansicht einer weiteren Ausgestaltung des Verbindungselements 3,
- Fig. 8: eine Draufsicht auf einen Abschnitt eines erfindungsgemäßen Vorspannrahmens,
- Fig. 9: eine Diagramm der Auslenkung des Auflagerahmens 1 in Abhängigkeit von der Bedienung der Stellschraube 6 und
- Fig. 10: ein Flussdiagramm einer Ausführungsform des erfindungsgemäßen Verfahrens.

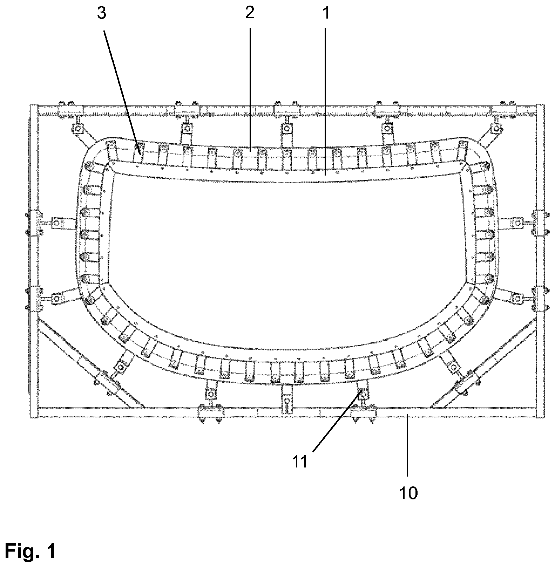

Figur 1 zeigt eine Draufsicht von oben auf einen erfindungsgemäßen Vorspannrahmen. Der Vorspannrahmen umfasst einen Auflagerahmen 1 und einen Trägerrahmen 2. Der Auflagerahmen 1 ist in Draufsicht vollständig innerhalb des Trägerrahmens 2 angeordnet und wird von Letzterem umgeben. Trägerrahmen 2 und Auflagerahmen 1 sind durch eine Vielzahl von Verbindungselementen 3 miteinander verbunden.

Der Vorspannrahmen ist mittels einer Vielzahl von Befestigungselementen 11 in einem Transportgestell 10 befestigt. Das Transportgestell 10 weist dazu eine rahmenartige Befestigungsbereich auf, der in der Figur zu sehen ist, und an dem die Befestigungselemente 11 befestigt sind. Auf Seiten des Vorspannrahmens sind die Befestigungselemente 11 am Trägerrahmen 2 angebracht. Die Befestigungselemente 11 können Stellschrauben oder ähnliche Einstellmöglichkeiten umfassen, mittels derer die Form des Vorspannrahmens bereits grob auf die Scheibengeometrie eingestellt werden kann.

Beim thermischen Vorspannen wird eine Glasscheibe auf den Auflagerahmen 1 abgelegt und mittels des beispielsweise auf Rollen gelagerten Transportgestells 10 zwischen zwei Blaskästen transportiert, wo sie mit einem Luftstrom beaufschlagt werden und dadurch rasch abgekühlt werden, wodurch die Vorspannung entsteht.

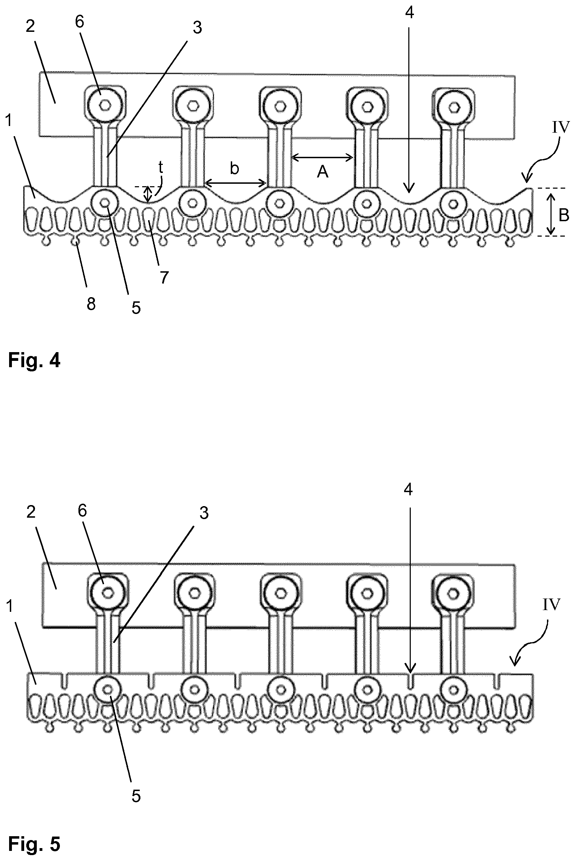

Der übersichtlichen Darstellung halber sind die erfindungsgemäßen Ausnehmungen 4 in der Figur nicht gezeigt - sie gehen aus der Detailansicht in Figur 4 hervor.

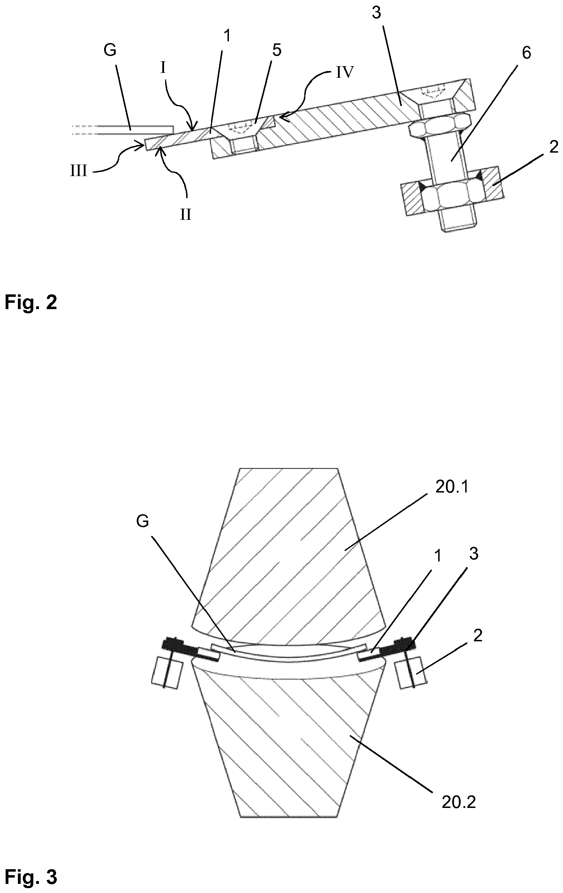

Figur 2 zeigt als Detailansicht einen Querschnitt durch den Vorspannrahmen der Figur 1. Es ist deutlich zu erkennen, dass der Trägerrahmen 2 und der Auflagerahmen 1 nicht übereinander angeordnet sind, wie das bei herkömmlichen Vorspannrahmen üblich ist, sondern räumlich versetzt sind, wobei der Abstand durch das Verbindungselement 3 überbrückt wird. Die beiden Endbereiche des Verbindungselements 3 weisen jeweils ein Schraubloch auf, ebenso wie der Auflagerahmen 1 und der Trägerrahmen 2. Das Verbindungselement 3 ist mittels einer Befestigungsschraube 5 mit dem Auflagerahmen 1 verbunden, die möglichst vollständig im Verbindungselement 3 und Auflagerahmen 1 versenkt ist. Das Verbindungselement 3 ist mittels einer Stellschraube 6 mit dem Trägerrahmen 2 verbunden. Durch die Stellschraube 6 kann der Auflagerahmen 1 im Bereich des jeweiligen Verbindungselements 3 in seiner Höhe verstellt werden. Durch die Vielzahl der Verbindungselemente 3 mit zugehörigen Stellschrauben 6 kann die Form des Auflagerahmens 1 sehr genau an die Scheibengeometrie angepasst werden.

Der Auflagerahmen 1 weist im Querschnitt vier Seitenflächen auf: eine obere Hauptfläche I, gegenüberliegend eine untere Hauptfläche II, sowie eine Vorderkante III und eine Hinterkante IV, die zwischen den Hauptflächen I, II verlaufen. Die nach oben weisende, vom Erdboden abgewandte obere Hauptfläche I dient zur Ablage der vorzuspannenden Glasscheibe G, was in der Figur ebenfalls angedeutet ist. Lediglich die Seitenkante der Glasscheibe G hat direkten Kontakt zum Auflagerahmen 1 und definiert eine gedachte umlaufende Glasscheiben-Kontaktlinie auf der oberen Hauptfläche I, die innerhalb der an die Vorderkante III angrenzenden Hälfte der oberen Hauptfläche I angeordnet ist. Das Metallfasergewebe, das typischerweise zwischen der Glasscheibe und dem Auflagerahmen angeordnet ist, ist nicht dargestellt.

Figur 3 zeigt eine erfindungsgemäße Anordnung zum thermischen Vorspannen von Glasscheiben. Die Glasscheibe G ist auf dem Auflagerahmen 1 zwischen einem oberen Blaskasten 20.1 und einem unteren Blaskasten 20.2 angeordnet. Durch die Blaskästen 20.1, 20.2, die mit einer Vielzahl von auf die Glasscheibe G gerichteten Düsen ausgestattet sind, wird die Glasscheibe G mit dem abkühlenden Luftstrom beaufschlagt, wodurch die Vorspannung erzeugt wird.

Der Vorteil der räumlichen Entkopplung des Auflagerahmens 1 vom Trägerrahmen 2 mit Hilfe der Verbindungselemente 3 ist in der Figur gut zu erkennen. Nur der Auflagerahmen 1 ist zwischen den Blaskästen 20.1, 20.2 angeordnet, während der Trägerrahmen 2 außerhalb verbleibt. Der Platzbedarf des Vorspannrahmens im Zwischenraum zwischen den Blaskästen 20.1, 20.2 wird dadurch verringert, so dass die Blaskästen 20.1, 20.2 einander und der Glasscheibe G stärker angenähert werden können. Dadurch wird die Vorspanneffizienz erhöht.

Figur 4 zeigt eine detaillierte Draufsicht auf einen Abschnitt des Vorspannrahmens aus Figur 1. Der Auflagerahmen 1 ist mit dem Trägerrahmen 2 über die Verbindungselemente 3 verbunden, welche mittels Befestigungsschrauben 5 mit dem Auflagerahmen 1 und mittels Stellschrauben 6 mit dem Trägerrahmen 2 verbunden sind. Die Verbindungselemente sind in einem gegenseitigen Abstand A von beispielsweise 20 mm angeordnet, welcher aber nicht notwendigerweise für sämtliche Paare benachbarter Verbindungselemente 3 konstant sein muss.

Zwischen benachbarten Verbindungselementen 3 weist der Auflagerahmen 1 jeweils eine Ausnehmung 4 auf. In den Bereichen, in denen der Auflagerahmen 1 mit den Verbindungselementen 3 überlappt, ragt die Hinterkante IV am meisten hervor und ist als gerade Abschnitt ausgebildet, wobei alle gerade Abschnitte auf einer Linie liegen, die die hypothetische "ursprüngliche" Hinterkante definiert. Demgegenüber ist die Hinterkante IV durch die Ausnehmungen 4 eingeschnitten. Die Ausnehmungen 4 schwächen die Struktur des Auflagerahmens 1, so dass dieser auf eine Höhenverstellung der Stellschraube 6 empfindlicher reagiert. Die Effizienz der Justage des Auflagerahmens 1 zur Anpassung an die Form der vorzuspannenden Glasscheibe wird dadurch vorteilhaft erhöht. Das ist der große Vorteil der vorliegenden Erfindung.

Die Breite B des Auflagerahmens 1, der aus Stahl gefertigt ist, beträgt beispielsweise 3 cm und seine Dicke (Materialstärke) beispielsweise 4 mm. Die Tiefe t der Ausnehmungen 4 beträgt mit beispielsweise 1 cm ein Drittel der Breite B. Die Breite b der Ausnehmungen 4 entspricht dem Abstand A benachbarter Verbindungselemente 3. Sie ist entlang der hypothetischen Hinterkante maximal und nimmt mit wachsendem Abstand zu dieser hypothetischen Hinterkante ab, wobei die Ausnehmungen 4 geschwungen und näherungsweise kosinusartig ausgeführt sind. Es ergibt sich eine Art Wellenprofil der Hinterkante IV, das sich als besonders effektiv erweisen hat.

Der Auflagerahmen 1 weist außerdem tropfenartige Öffnungen 7 nahe der Vorderkante III auf, die hinsichtlich der Ausrichtung alternierend angeordnet sind. Die Glaskanten-Kontaktlinie verläuft über diese Öffnungen 7. Die Öffnungen 7 begünstigen einerseits die Luftzirkulation beim thermischen Vorspannen, was für die Vorspanneffizienz vorteilhaft ist, weil erwärmte Luft schneller abgeführt werden kann. Andererseits bewirken die Öffnungen 7, dass auch die Glasscheibenkante mit einem Luftstrom beaufschlagt wird, wodurch eine stabilitätssteigernde Kantenspannung erzeugt wird.

Der Auflagerahmen 1 weist außerdem periodische Befestigungsvorsprünge 8 auf. An den Befestigungsvorsprüngen 8 kann ein Metallgewebe befestigt werden, das auf den Auflagerahmen 1 aufgespannt wird, um einen direkten Kontakt zwischen Glasscheibe und Auflagerahmen 1 zu verhindern und die Glasscheibe dadurch zu schonen und den Auflagerahmen 1 von der Glasscheibe thermisch zu isolieren. Wie der Figur zu entnehmen ist, werden lokal sehr begrenzte Vorsprünge wie die Befestigungsvorsprünge 8, die die Lage der Vorderkante III nicht wesentlich bestimmen, bei der Bestimmung der Breite B des Auflagerahmens 1 nicht berücksichtigt. Die Befestigungsvorsprünge 8 können auch beidseitig, also sowohl an der Vorderkante III als auch an der Hinterkante IV angeordnet sein.

Figur 5 zeigt eine weitere Ausgestaltung des erfindungsgemäßen Auflagerahmen 1. Im Unterschied zur Ausgestaltung der Figur 3 sind die Ausnehmungen 4 als schmale Einschnitte ausgeführt. Auch so kann die Struktur des Auflagerahmens 1 geschwächt werden, um eine effizientere Justage zu ermöglichen.

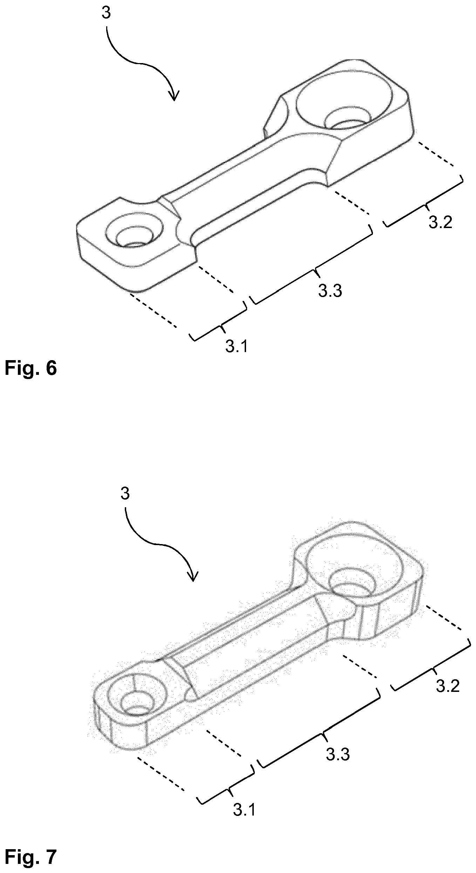

Figur 6 zeigt eine bevorzugte Ausgestaltung eines Verbindungselements 3. Es weist einen ersten Befestigungsabschnitt 3.1 auf, einen zweiten Befestigungsabschnitt 3.2 und einen dazwischen verlaufenden Verbindungsabschnitt 3.3. Der erste Befestigungsabschnitt 3.1 wird mit dem Auflagerahmen 1 verschraubt, der zweite Befestigungsabschnitt 3.2 mit dem Trägerrahmen 2. Dazu sind die beiden Befestigungsabschnitte 3.1, 3.2 mit Schraublöchern versehen, die in der Figur zu erkennen sind.

Der Verbindungsabschnitt weist eine Breite von etwa 15 mm auf. Die beiden Befestigungsabschnitte 3.1, 3.2 sind demgegenüber mit einer Breite von etwa 25 mm deutlich verbreitert, so dass sich ein knochenartiges Aussehen ergibt. Durch die breiten Befestigungsabschnitte 3.1, 3.2 wird eine stabile Verbindung mit dem Trägerrahmen 2 und dem Auflagerahmen 1 ermöglicht. Der Verbindungsabschnitt 3.3, der im Zwischenraum zwischen Trägerrahmen 2 und Auflagerahmen 1 angeordnet ist und deren Abstand überbrückt, schränkt die Luftzirkulation durch seine schmale Ausgestaltung weniger stark ein als wenn er die gleiche Breite aufweisen würde. Der Verbindungsabschnitt ist beidseitig abgeschrägt ausgebildet, so dass im Falle eines Glasbruchs möglichst wenig Glasscherben auf ihm liegen bleiben können.

Figur 7 zeigt eine alternative bevorzugte Ausgestaltung des Verbindungselements 3. Der zweite Befestigungsabschnitt 3.2 und der Verbindungsabschnitt 3.3 sind ähnlich wie in der Ausgestaltung der Figur 6 ausgebildet. Der erste Befestigungsabschnitt 3.1 dagegen weist die gleiche Breite auf wie der Verbindungsabschnitt 3.3. Dadurch wird eine kleinere Auflagefläche für den Auflagerahmen 1 bereitgestellt. Das Verbindungselement 3 hat dadurch einen weniger ausgeprägten stabilisierenden Effekt auf den Auflagerahmen 1, der sich folglich einfacher verformen und damit mittels der Stellschrauben einstellen lässt.

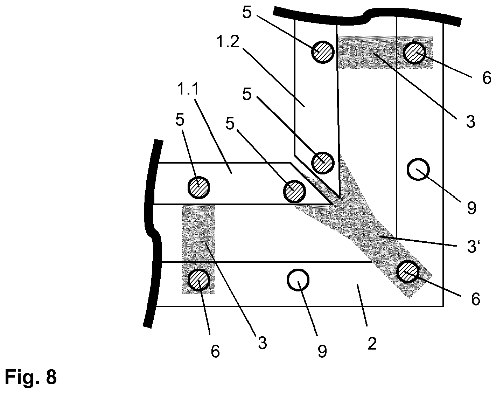

Figur 8 zeigt einen Eckbereich eines erfindungsgemäßen Vorspannrahmens - also eines Bereichs, der einer Ecke der zu vorzuspannenden Glasscheibe zugeordnet ist. Die Glasscheibe ist beispielsweise eine Heckscheibe für ein Kraftfahrzeug, die einen etwa viereckigen Umriss hat. Der Auflagerahmen 1 ist nicht einstückig ausgebildet, sondern aus vier im Wesentlichen geraden Teilstücken zusammengesetzt, die jeweils einer Seite der viereckigen Glasscheibe zugeordnet sind und an den Ecken zusammentreffen. Die Figur zeigt einen solchen Eckbereich, in dem zwei Teilstücke 1.1, 1.2 aufeinandertreffen. Die beiden endständigen Schraublöcher beider Teilstücke 1.1, 1.2 sind mit einem gemeinsamen Verbindungselemente 3' verschraubt, das mit einer einzigen Stellschraube 6 am Trägerrahmen 2 befestigt ist.

Das gemeinsame Verbindungselement 3' erhöht die Stabilität des Vorspannrahmens, insbesondere des Auflagerahmens 1. Allerdings wird die Flexibilität beim Justieren der Form des Auflagerahmens 1 eingeschränkt, weil für die Enden beider Teilstücke 1.1, 1.2 nur eine einzige Stellschraube 6 zur Verfügung steht. Der Trägerrahmen 2 weist daher zwei zusätzliche, nicht belegte Schraublöcher 9 auf, etwa gegenüberliegend den Schraublöchern für die Befestigungsschrauben 5 des Auflagerahmens 1. Für Anwendungen, bei denen es besonders auf empfindliche Justiermöglichkeiten in den Eckbereichen ankommt, kann das gemeinsame Verbindungselement 3' gegen zwei separate Verbindungselemente 3 ausgetauscht werden.

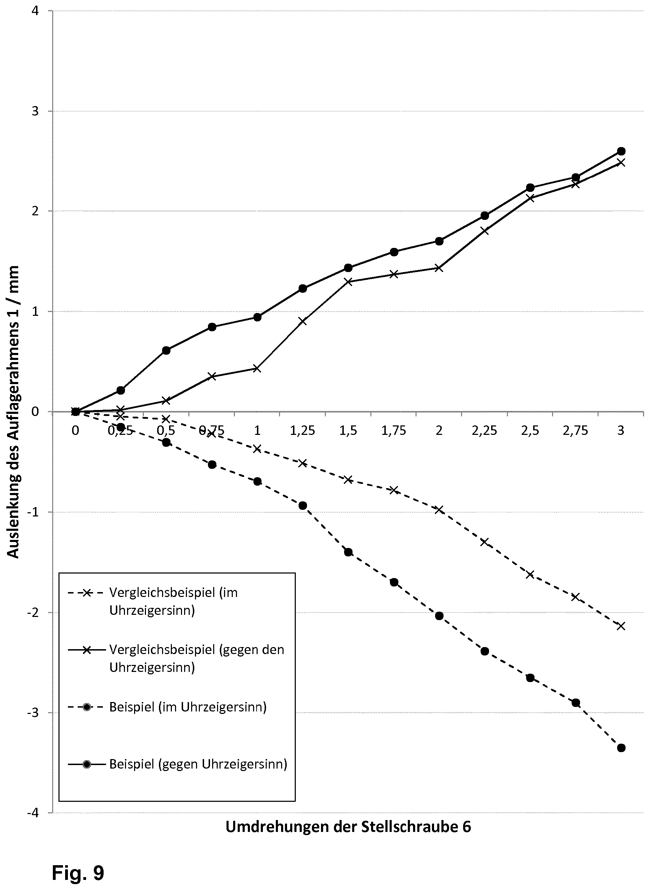

Figur 9 zeigt anhand eines Diagramms beispielhaft die Wirkung des erfindungsgemäßen Auflagerahmens.

### Beispiel

Es wurde ein erfindungsgemäßer Vorspannrahmen gemäß Figur 4 hergestellt. Mittels einer mechanischen Tastvorrichtung wurde die Auslenkung des Auflagerahmens 1 bezogen auf die Startposition in Abhängigkeit von der Drehung einer Stellschraube 6 gemessen. Die Stellschraube 6 wurde jeweils eine Viertel Drehung weitergestellt und die Auslenkung gemessen. Die beiden benachbarten Stellschrauben 6 wurden nachgestellt, so dass die Differenz der Drehung von untersuchter Stellschraube 6 und benachbarter Stellschraube 6 jeweils eine halbe Umdrehung betrug. Es wurden zwei Messreihen durchgeführt, wobei die Stellschraube einmal im Uhrzeigersinn und einmal gegen den Uhrzeigersinn verstellt wurde.

### Vergleichsbeispiel

Als Vergleich wurde die gleiche Messung mit einem Vorspannrahmen durchgeführt, der ebenso wie der Vorspannrahmens des Beispiels ausgebildet war, jedoch ohne die erfindungsgemäßen Aussparungen 4.

Dem Diagramm ist zu entnehmen, dass die Auslenkung des Auflagerahmens 1 im erfindungsgemäßen Beispiel signifikant größer war. Die gleiche Drehung der Stellschraube 6 führt bei einem erfindungsgemäßen Auflagerahmen 1 also zu einer größeren Auslenkung. Der erfindungsgemäße Auflagerahmen 1 ist also mit höherer Empfindlichkeit justierbar als ein herkömmlicher Auflagerahmen. Der Effekt tritt insbesondere auch bei geringen Schraubendrehungen auf (bis zu eine Umdrehung), die im praktischen Einsatz erfahrungsgemäß besonders häufig sind.

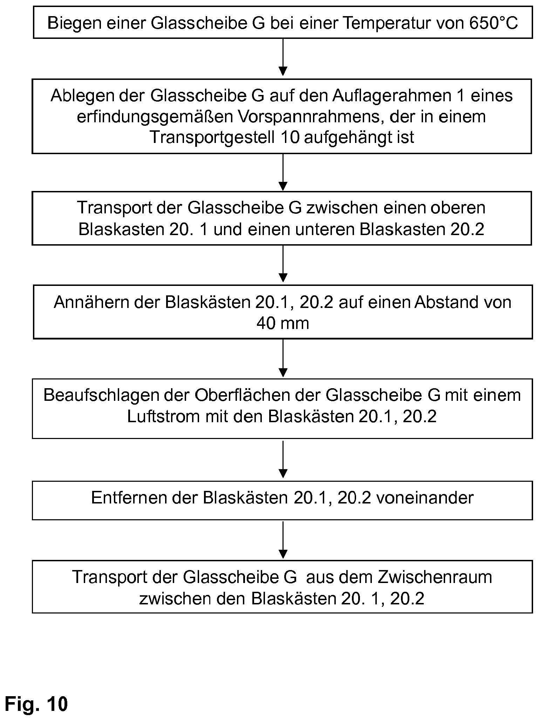

Figur 10 zeigt ein Ausführungsbeispiel des erfindungsgemäßen Verfahrens zum thermischen Vorspannen von Glasscheiben anhand eines Flussdiagramms.

### Bezugszeichenliste:

- (1): Auflagerahmen
- (1.1), (1.2): Teilstücke des Auflagerahmens 1
- (2): Trägerrahmen
- (3): Verbindungselement
- (3.1): erster Befestigungsabschnitt des Verbindungselements 3
- (3.2): zweiter Befestigungsabschnitt des Verbindungselements 3
- (3.3): Verbindungsabschnitt des Verbindungselements 3
- (3'): gemeinsames Verbindungselement zweier Teilstücke 1.1, 1.2
- (4): Ausnehmung des Auflagerahmens 1
- (5): Befestigungsschraube zwischen Verbindungselement 3 und Auflagerahmen 1
- (6): Stellschraube zwischen Verbindungselement 3 und Trägerrahmen 2
- (7): Öffnung des Auflagerahmens 1
- (8): Befestigungsvorsprung des Auflagerahmens 1
- (9): unbelegtes Schraubloch

- (10): Transportgestell
- (11): Befestigungselement zwischen Transportgestell 10 und Trägerrahmen 2

- (20.1): oberer Blaskasten
- (20.2): unterer Blaskasten

- (B): Breite des Auflagerahmens 1
- (A): Abstand benachbarter Verbindungselemente 3
- (b): Breite der Ausnehmung 4
- (t): Tiefe der Ausnehmung 4

- (I): obere Hauptfläche des Auflagerahmens 1
- (II): untere Hauptfläche des Auflagerahmens 1
- (III): Vorderkante des Auflagerahmens 1
- (IV): Hinterkante des Auflagerahmens 1

- (G): Glasscheibe

## Patentansprüche

1. Vorspannrahmen zum thermischen Vorspannen von Glasscheiben, umfassend einen Trägerrahmen (2) und einen Auflagerahmen (1), der mit dem Trägerrahmen (2) über eine Mehrzahl von Verbindungselementen (3) verbunden und vollständig innerhalb des Trägerrahmens (2) angeordnet ist,
wobei der Auflagerahmen (1) eine obere Hauptfläche (I) zum Auflegen einer Glasscheibe (G), eine untere Hauptfläche (II), eine Vorderkante (III) und eine Hinterkante (IV) aufweist und
wobei der Auflagerahmen (1) über die Hinterkante (IV) eingebrachte Ausnehmungen (4) aufweist, die zwischen benachbarten Verbindungselementen (3) angeordnet sind.

2. Vorspannrahmen nach Anspruch 1, wobei zwischen mindestens 50% der benachbarten Verbindungselemente (3) Ausnehmungen (4) angeordnet sind, bevorzugt zwischen mindestens 70 %, besonders bevorzugt zwischen mindestens 90 %.

3. Vorspannrahmen nach Anspruch 1 oder 2, wobei die Ausnehmungen (4) eine Tiefe (t) von mindestens 10 % der Breite des Auflagerahmens (1) aufweisen, beispielsweise von 10 % bis 70 %, bevorzugt von mindestens 20 %, beispielsweise von 20 % bis 50 %.

4. Vorspannrahmen nach einem der Ansprüche 1 bis 3, wobei die Ausnehmungen (4) eine Breite (b) von mindestens 50 % des Abstands benachbarter Verbindungselemente (3) aufweisen, bevorzugt von mindestens 70 %, besonders bevorzugt von mindestens 90 %.

5. Vorspannrahmen nach einem der Ansprüche 1 bis 4, wobei die Breite (b) der Ausnehmungen (4) mit wachsender Tiefe abnimmt und wobei die Ausnehmungen (4) bevorzugt eine gekrümmte Kontur haben.

6. Vorspannrahmen nach einem der Ansprüche 1 bis 5, wobei der Auflagerahmen (1) eine Breite (B) von 10 mm bis 100 mm aufweist, bevorzugt von 20 mm bis 40 mm.

7. Vorspannrahmen nach einem der Ansprüche 1 bis 6, wobei der Auflagerahmen (1) eine Dicke von 1 mm bis 10 mm aufweist, bevorzugt von 2 mm bis 5 mm.

8. Vorspannrahmen nach einem der Ansprüche 1 bis 7, wobei die Verbindungselemente (3) jeweils
- einen ersten Befestigungsabschnitt (3.1) aufweisen, der mit einer Befestigungsschraube (5) mit dem Auflagerahmen (1) verbunden ist,
- einen zweiten Befestigungsabschnitt (3.2) aufweisen, der mit einer Stellschraube (6) mit dem Trägerrahmen (2) verbunden ist, und
- einen sich zwischen dem ersten Befestigungsabschnitt (3.1) und dem zweiten Befestigungsabschnitt (3.2) erstreckenden Verbindungsabschnitt (3.3) aufweist.

9. Vorspannrahmen nach Anspruch 8, wobei der erste Befestigungsabschnitt (3.1) und der zweite Befestigungsabschnitt (3.2) gegenüber dem Verbindungsabschnitt (3.3) verbreitert sind.

10. Vorspannrahmen nach Anspruch 8, wobei der erste Befestigungsabschnitt (3.1) und der Verbindungsabschnitt (3.3) im Wesentlichen die gleiche Breite aufweisen und der zweite Befestigungsabschnitt (3.2) demgegenüber verbreitert ist.

11. Vorspannrahmen nach einem der Ansprüche 1 bis 10, wobei der Auflagerahmen (1) aus mehreren Teilstücken (1.1, 1.2) zusammengesetzt ist und wobei benachbarte Teilstücke (1.1, 1.2) mittels eines gemeinsamen Verbindungselements (3) mit dem Trägerrahmen (2) verbunden sind.

12. Vorspannrahmen nach einem der Ansprüche 1 bis 11, wobei benachbarte Verbindungselemente (3) einen Abstand von 5 mm bis 100 mm aufweisen, bevorzugt von 10 mm bis 50 mm.

13. Verfahren zum thermischen Vorspannen von Glasscheiben, wobei
(i) ein Vorspannrahmen nach einem der Ansprüche 1 bis 12, auf dessen Auflagerahmen (1) eine erhitzte Glasscheibe (G) angeordnet ist, zwischen einen ersten Blaskasten (20.1) und einen zweiten Blaskasten (20.2) bewegt wird;
(ii) die Glasscheibe (G) mittels der beiden Blaskästen (20.1, 20.2) mit einem Gasstrom beaufschlagt wird, so dass die Glasscheibe (G) abgekühlt wird.

14. Verfahren nach Anspruch 13, wobei der Abstand der Blaskästen (20.1, 20.2) in Verfahrensschritt (ii) weniger als 90 mm, bevorzugt weniger als 70 mm, besonders bevorzugt weniger als 50 mm beträgt.

15. Verwendung einer mit dem Verfahren gemäß Anspruch 13 oder 14 vorgespannten Glasscheibe (G) in Fortbewegungsmitteln für den Verkehr auf dem Lande, in der Luft oder zu Wasser, bevorzugt als Fensterscheibe in Schienenfahrzeugen oder Kraftfahrzeugen, insbesondere als Heckscheibe, Seitenscheibe oder Dachscheibe von Personenkraftwagen.

## Claims

1. Tempering frame for thermal tempering of glass panes, comprising a carrier frame (2) and a support frame (1) that is joined to the carrier frame (2) via a plurality of connection elements (3) and is arranged completely within the carrier frame (2),
wherein the support frame (1) has an upper primary surface (I) for placing a glass pane (G), a lower primary surface (II), a front edge (III), and a rear edge (IV), and
wherein the support frame (1) has recesses (4) introduced in the rear edge (IV), which are arranged between adjacent connection elements (3).

2. Tempering frame according to claim 1, wherein recesses (4) are arranged between at least 50% of the adjacent connection elements (3), preferably between at least 70%, particularly preferably between at least 90%.

3. Tempering frame according to claim 1 or 2, wherein the recesses (4) have a depth (t) of at least 10% of the width of the support frame (1), for example, from 10% to 70%, preferably of at least 20%, for example, from 20% to 50%.

4. Tempering frame according to one of claims 1 through 3, wherein the recesses (4) have a width (b) of at least 50% of the distance between adjacent connection elements (3), preferably of at least 70%, particularly preferably of at least 90%.

5. Tempering frame according to one of claims 1 through 4, wherein the width (b) of the recesses (4) decreases with increasing depth and wherein the recesses (4) preferably have a curved outline.

6. Tempering frame according to one of claims 1 through 5, wherein the support frame (1) has a width (B) of 10 mm to 100 mm, preferably of 20 mm to 40 mm.

7. Tempering frame according to one of claims 1 through 6, wherein the support frame (1) has a thickness of 1 mm to 10 mm, preferably of 2 mm to 5 mm.

8. Tempering frame according to one of claims 1 through 7, wherein the connection elements (3) have, in each case,
- a first attachment section (3.1), which is connected to the support frame (1) by an attachment screw (5),
- a second attachment section (3.2), which is connected to the carrier frame (2) by an adjusting screw (6), and
- a connecting section (3.3) extending between the first attachment section (3.1) and the second attachment section (3.2).

9. Tempering frame according to claim 8, wherein the first attachment section (3.1) and the second attachment section (3.2) are widened compared to the connecting section (3.3).

10. Tempering frame according to claim 8, wherein the first attachment section (3.1) and the connecting section (3.3) have substantially the same width and the second attachment section (3.2) is widened compared thereto.

11. Tempering frame according to one of claims 1 through 10, wherein the support frame (1) is composed of multiple subsections (1.1, 1.2) and wherein adjacent subsections (1.1, 1.2) are connected to the carrier frame (2) by means of a common connection element (3).

12. Tempering frame according to one of claims 1 through 11, wherein the distance between adjacent connection elements (3) is from 5 mm to 100 mm, preferably from 10 mm to 50 mm.

13. Method for thermal tempering of glass panes, wherein
(i) a tempering frame according to one of claims 1 through 12, on whose support frame (1) a heated glass pane (G) is arranged, is moved between a first blow box (20.1) and a second blow box (20.2);
(ii) the glass pane (G) is impinged on by a stream of gas by means of the two blow boxes (20.1, 20.2) such that the glass pane (G) is cooled.

14. Method according to claim 13, wherein the distance between the blow boxes (20.1, 20.2) in step (ii) is less than 90 mm, preferably less than 70 mm, particularly preferably less than 50 mm.

15. Use of a glass pane (G) tempered with the method according to claim 13 or 14 in means of transportation for travel on land, in the air, or on water, preferably as a window pane in rail vehicles or motor vehicles, in particular as a rear window, side window, or roof panel of passenger cars.

## Revendications

1. Cadre de trempe pour la trempe thermique de plaques de verre, comportant un cadre de support (2) et un cadre d'appui (1), qui est relié au cadre de support (2) par l'intermédiaire d'une pluralité d'éléments de liaison (3) et est disposé entièrement à l'intérieur du cadre de support (2),
le cadre d'appui (1) présentant une face principale supérieure (I) pour l'appui d'une plaque de verre (G), une face principale inférieure (II), un bord avant (III) et un bord arrière (IV) ; et
le cadre d'appui (1) présentant des creux (4) introduits dans le bord arrière (IV), qui sont disposés entre des éléments de liaison adjacents (3).

2. Cadre de trempe selon la revendication 1, dans lequel des creux (4) sont disposés entre au moins 50 % des éléments de liaison adjacents (3), de préférence entre au moins 70 %, de manière particulièrement préférée entre au moins 90 %.

3. Cadre de trempe selon l'une des revendications 1 ou 2, dans lequel les creux (4) présentent une profondeur (t) d'au moins 10 % de la largeur du cadre d'appui (1), par exemple de 10 % à 70 %, de préférence d'au moins 20 %, par exemple de 20 % à 50 %.

4. Cadre de trempe selon l'une des revendications 1 à 3, dans lequel les creux (4) présentent une largeur (b) d'au moins 50 % de la distance d'éléments de liaison adjacents (3), de préférence d'au moins 70 %, de manière particulièrement préférée d'au moins 90 %.

5. Cadre de trempe selon l'une des revendications 1 à 4, dans lequel la largeur (b) des creux (4) diminue avec une profondeur croissante et dans lequel les creux (4) présentent de préférence un contour courbe.

6. Cadre de trempe selon l'une des revendications 1 à 5, dans lequel le cadre d'appui (1) présente une largeur (B) de 10 à 100 mm, préférence de 20 à 40 mm.

7. Cadre de trempe selon l'une des revendications 1 à 6, dans lequel le cadre d'appui (1) présente une épaisseur de 1 mm à 10 mm, de préférence de 2 mm à 5 mm.

8. Cadre de trempe selon l'une des revendications 1 à 7, dans lequel les éléments de liaison (3)
- présentent chacun une première section de fixation (3.1), qui est reliée au cadre d'appui (1) par une vis de fixation (5) ;
- présentent chacun une seconde section de fixation (3.2), qui est reliée au cadre de support (2) par une vis de réglage (6) ; et
- présentent chacun une section de liaison (3.3) s'étendant entre la première section de fixation (3.1) et la seconde section de fixation (3.2).

9. Cadre de trempe selon revendication 8, dans lequel la première section de fixation (3.1) et la seconde section de fixation (3.2) sont élargies par rapport à la section de liaison (3.3).

10. Cadre de trempe selon la revendication 8, dans lequel la première section de fixation (3.1) et la section de liaison (3.3) présentent sensiblement la même largeur et la seconde section de fixation (3.2) est élargie par rapport à celle-ci.

11. Cadre de trempe selon l'une des revendications 1 à 10, dans lequel le cadre d'appui (1) est composé de plusieurs sous-sections (1.1, 1.2) et dans lequel des sous-sections adjacentes (1.1, 1.2) sont reliées au cadre de support (2) au moyen d'un élément de liaison commun (3).

12. Cadre de trempe selon l'une des revendications 1 à 11, dans lequel des éléments de liaison adjacents (3) présentent une distance de 5 mm à 100 mm, de préférence de 10 mm à 50 mm.

13. Procédé de trempe thermique de plaques de verre, dans lequel
(i) on déplace un cadre de trempe selon l'une des revendications 1 à 12, sur le cadre d'appui (1) duquel est disposée une plaque de verre (G) chauffée, entre un premier caisson de soufflage (20.1) et un second caisson de soufflage (20.2) ;
(ii) on applique un courant de gaz sur la plaque de verre (G) au moyen des deux caissons de soufflage (20.1, 20.2) de telle sorte que la plaque de verre (G) est refroidie.

14. Procédé selon la revendication 13, dans lequel la distance des caissons de soufflage (20.1, 20.2) est inférieure à 90 mm, de préférence inférieure à 70 mm, de manière particulièrement préférée inférieure à 50 mm.

15. Utilisations d'une plaque de verre (G) trempée par le procédé selon l'une des revendications 13 ou 14 dans des moyens de locomotion pour le déplacement sur terre, dans l'air ou sur l'eau, de préférence en tant que vitre de fenêtre dans des véhicules sur rails ou des véhicules automobiles, en particulier en tant que vitre arrière, vitre latérale ou vitre de toit de véhicules particuliers.
